# EUROPEAN PATENT APPLICATION

(11) **EP 1 978 443 A2**
(43) Date of publication of application: **08.10.2008**
(21) Application number: 07252654.4
(22) Date of filing: 29.06.2007
(51) Int. Cl.: G06F 9/445

(54) **Verifying method for implementing management software**

(30) Priority: 02.04.2007 US 909711 P; 13.06.2007 US 762082
(71) Applicant: Inventec Corporation, Shih-Lin District Taipei City (TW)
(72) Inventor: Yeung, Alan S., Burlingame, CA 94010 (US); Cha, Deming, Palo Alto, CA 94303 (US); Pang, Nicholas Y., San Mateo, CA 94403 (US)
(74) Representative: Chamberlain, Alan James

(57) **Abstract**

A verifying method for implementing management software at a client end is provided herein. The management software works for collecting, managing, and analyzing data of a plurality of peripheral hosts. In the verifying method, a management system fitting the requirements of the management software is established at a service end first. The management system includes a management host and a plurality of first peripheral hosts, and the management host is connected to each of the first peripheral hosts through a network, and the management software is installed in the management host. One or more verifying scenarios are provided herein for testing configuration and performance of the management software at a simulated environment of the client end. Each of the scenarios for testing may consider that a request form the client computer is validated through multiple authorization points and finally a valid and complete response to the client's request is returned.

## Description

### BACKGROUND OF THE INVENTION

### 1. Field of the Invention

The present invention generally relates to a verifying method for installing software, and in particular, to a verifying method for implementing Enterprise software.

### 2. Description of Related Art

Along with the advance in information technology and the diversity of enterprise business, enterprises have developed various information systems meeting the demands for managing information in each of the departments. These information systems collect and record a large sum of data from the departments. However, the departments usually have their own requirements for the information systems, which result in that each of the information systems may only work for individual department independently and the data among different information systems cannot be exchanged.

As the enterprises move forward to globalization, the communications between different branches or departments have become an inevitable issue, and how to exchange data among different information systems is more crucial. The enterprises need to contribute more efforts and costs for maintaining these information systems and ensuring the correctness and consistency of the data therein.

Under the aforesaid situation of strong demands on data integration, a solution called Enterprise Resource Planning (ERP) system that can fit the need of managing information and enhance the competitiveness of the enterprise was derived. The ERP system is application software used for integrating and combining the data of the departments, such as financial, accounting, production, material management, quality assurance, marketing, and human resource departments, in a company. When the development of the ERP system tends to be mature, the company may connect all of their branches with the global financial/production/marketing system, so as to instantly analyze the quality and specifications of the products, and obtain useful information such as profits and client satisfaction.

In addition to the ERP system that provides the integration of enterprise resources and the synchronization of data, software vendors also design a series of business-oriented software according to various enterprise flows and demands. The software collaborates with the ERP system and makes use of the database of the ERP system so as to improve the effectiveness of the operation. The software is the so called Enterprise software.

However, the ERP system is bulky and complicated. When implementing the Enterprise software with the ERP system, a large sum of parameters, sophisticated processes, and repeated tests need to be carried out, such that the Enterprise software can comply with the ERP system precisely and operate normally. Accordingly, the implementation of the Enterprise software always requires support from professional experts. Through cooperation of experienced consultants from software vendors with the staffs from the management information system (MIS) department of the company for a few weeks or months, the desired software and parameters required by the Enterprise software are able to be verified and fully implemented. As a result, the company has to spend considerable money and manpower on accomplishing the implementation. Moreover, when there is a need to maintain or update the Enterprise software, same troublesome implementing procedures have to be undergone, which is not only time consuming but laborious.

### SUMMARY OF THE INVENTION

Accordingly, the present invention is directed to a verifying method for implementing management software. A management host pre-installed with pre-configured management software at a service end is provided for a client end to implement the management software. Installation steps for management host at the client end are significantly simplified and the time for verifying the management software is also significantly shortened, in which time and cost for the implementation is reduced.

The present invention provides a verifying method for implementing management software at a simulated environment of a client end. The management software works for collecting, managing, and analyzing data of a plurality of peripheral hosts. In the verifying method, a management system fitting the requirements of the management software is established at a service end first. The management system includes a management host and a plurality of first peripheral hosts, and the management host is connected to each of the first peripheral hosts through a network, and the management software is installed in the management host. One or more verifying scenarios are provided herein for testing configuration and performance of the management software at the simulated environment of the client end.

According to an embodiment of the present invention, the management host is pre-installed with a plurality of pre-configured management software at a simulated environment of a service end, and the management host is connected to a plurality of peripheral hosts at the client end through a network. In the verifying method, data is set in the management host and the management host is rebooted after finishing the implementation of the management software. A verifying scenario which touches on multiple authorization points in a path from the client to the peripheral hosts via the management software in the management host is selected. A request is created according to the verifying scenario and sending the request to the path for validation, if a valid response corresponding to the request is returned, the implementation of the management software is verified as complete and successful.

In the above-mentioned method, the step of setting data in the management host comprises obtaining software licensing data, network configuration data, and software configuration data of the peripheral hosts, and setting the software licensing data, network configuration data, and software configuration data in the management host.

In the above-mentioned method, the peripheral hosts comprise an Exchange Server, a Structured Query Language (SQL) Server, an Active Directory Service Server, and a Backend Server.

In the above-mentioned method, one of the peripheral hosts comprises an engine for bundling service requests to a plurality of business suite applications in an enterprise application system, configuration tools and a metadata repository.

In the above-mentioned method, the business suite applications comprise an enterprise resource planning (ERP) application, a customer relationship management (CRM) application, a supplier relationship management (SRM) application, a supply chain management (SCM) application, a business intelligence (BI) application, or a marketplace & e-procurement application. The present invention provides a system for verifying implementation of management software. In the system, a plurality of pre-configured management software is pre-installed in a management host at a service end. The management host is connected to a plurality of peripheral hosts at a simulated environment of a client end through a network. A plurality of parameters provided by a knowledge management system is set in the management host and then the management host is rebooted to finish the implementation of the management software. A verifying scenario which touches on multiple authorization points in a path from the client to the peripheral hosts is selected via the management software in the management host. A request is created according to the verifying scenario and sending the request to the path for validation, if a valid response corresponding to the request is returned, the implementation of the management software is verified as complete and successful.

In the system above, the parameters set in the management host comprising software licensing data, network configuration data, and software configuration data of the peripheral hosts at the service end, and setting the software licensing data, network configuration data, and software configuration data in the management host.

In the system above, if the valid response is not obtained by the client computer after for a predetermined time, the knowledge management system is updated and another request is created according to the verifying scenario and sent to the path for validation.

In the system above, if the valid response is not obtained by the client computer after for a predetermined time, a second set of parameters are selected from the knowledge management system and another request is created according to the verifying scenario and sent to the path for validation.

In the above-mentioned method, the request is created according to the verifying scenario in a client computer, wherein the client computer is set up with a client application of the management software in order to work with the management host.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic diagram illustrating a method for implementing management software according to an embodiment of the present invention.

FIG. 2 is a flowchart illustrating a verifying method for implementing management software according to an embodiment of the present invention.

FIG. 3 shows a schematic diagram illustrating architecture of an embodiment where the management host is rebooted and works in the Enterprise.

FIG.4 shows a request created according to a verifying scenario according to an embodiment of the present invention.

FIG.5 shows a schematic diagram illustrating architecture of the management system and a verifying method for implementing management software in the management system.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

A method for implementing management software and a method for implementing hardware with pre-configured software are provided in two co-pending patent applications respectively, one of which is titled "METHOD FOR IMPLEMENTING MANAGEMENT SOFTWARE, HARDWARE WITH PRE-CONFIGURED SOFTWARE AND IMPLEMENTING METHOD THEREOF," and the other of which is titled "KNOWLEDGE MANAGEMENT SYSTEM AND METHOD FOR IMPLEMENTING MANAGEMENT SOFTWARE USING THE SAME" by inventors which are the same as the present invention. The entirety of each of the above-mentioned patent applications is hereby incorporated by reference herein and made a part of this specification.

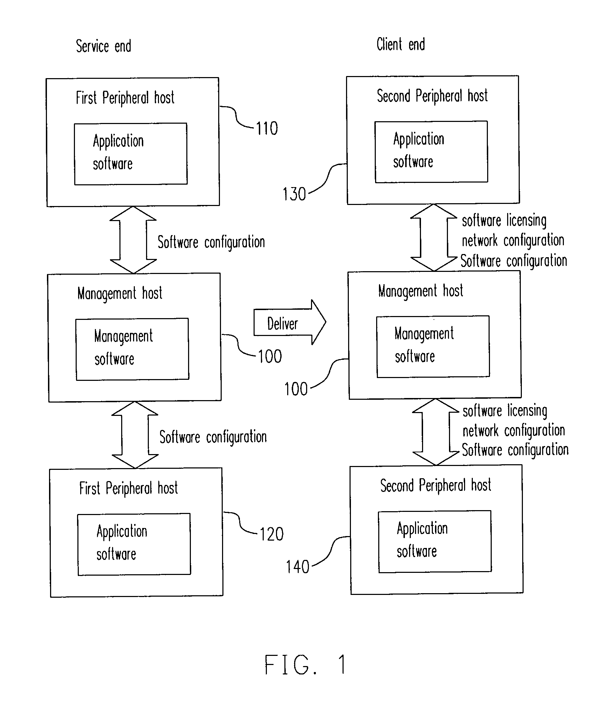

The method for implementing management software in the prior application, please refer to FIG. 1, is implemented at both a service end and a client end. At the service end, the management host 100 is connected to first peripheral hosts 110 and 120 and installed with the management software. The software configuration between the management software and the application software installed in first peripheral hosts 110 and 120 are then preset. Afterwards, the management host 100 installed with the pre-configured software is delivered to the client end and connected with second peripheral hosts 130 and 140. The remaining tasks are just simply to obtain software licensing data of the application software installed in the second peripheral hosts 130 and 140, to set software configuration data of the second peripheral hosts 130 and 140, and to set network configuration data of the second peripheral hosts 130 and 140, and then the implementation is completed. In the method for implementing management software of the embodiment, a knowledge management system (KMS) is used for providing the data required for implementing the management software in the management host 100.

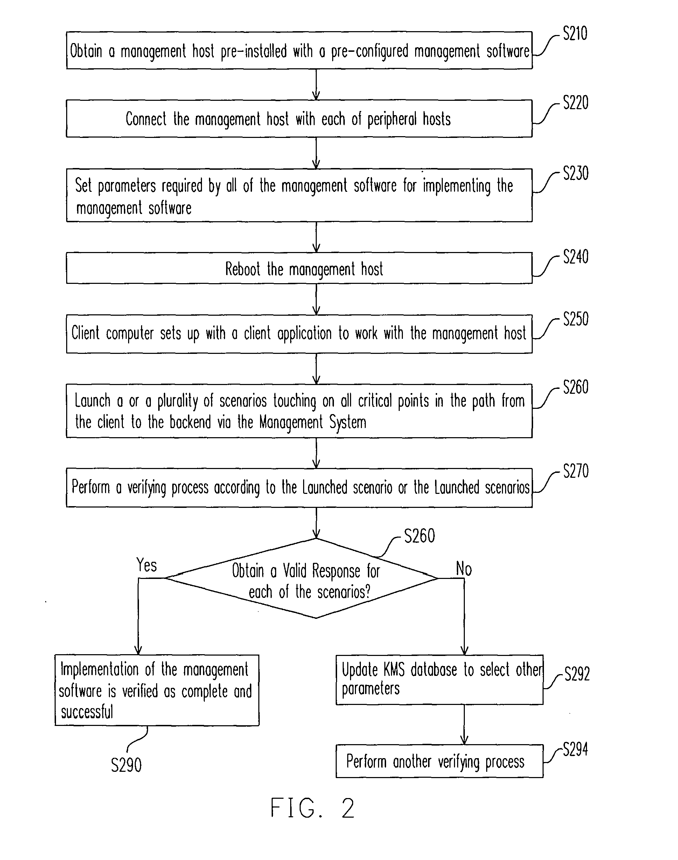

Please refer to FIG.2, after the software and hardware equipments are completely installed and configured, the management hosts are pre-installed with the pre-configured management software, as in step S210. The management host is then connected to the system network, such that the connection between the management host and the peripheral hosts which is simulated an environment originally configured at the client end is established, and data transmission is allowed, as in step S220. Here, in order for the management host to identify the peripheral hosts connected therewith and to install the application programs in the peripheral hosts, as in step S230, it is necessary to obtain software licensing data, software configuration data, and network configuration data of the peripheral hosts for setting the management software.

As in step S240, after the parameters required by all the management software are all set, the user is then able to reboot the management host, such that the configured parameters take effect. Up to here, the implementation of the management software is finished. Following is a verifying process for testing configuration of the management host. The present invention provides a verifying method for implementing management software at the simulated environment of the client end. As shown in step S250, a client computer is first set up with a client application of the management system in order to work with the management host. As in step S260, a or a plurality of scenarios, each of which touches on all critical points in a path from the client to the backend via the management system according to the corresponding scenario is launched for testing.

A plurality of scenarios can be proposed for verifying the implementation of the management software, which depends on the requirements. Each of the scenarios for testing may consider that a request form the client computer is validated through multiple authorization points and finally a valid and complete response to the client's request is returned. After the scenario or the plurality of scenarios for verifying are launched, a verifying process of an embodiment of the invention for each scenario is performed according to the launched scenario, as in step S270. When the verifying process is done, it is determined whether a valid response for each of the scenarios is obtained or not, as in step S280. If all of the valid responses in response to all of the launched scenarios are obtained by the client computer, as in step S290, it means that the implementation of the management software is verified as complete and successful. It means that the path from the client computer to the backend via the management system is valid and complete. It is noted that the definition of "complete" and "successful" at least mean that the implementation of the management software is completed and meets requirements from the client end or meets a requirement of establishing a mutual communication path between the client computer and the backend.

In a case that if the valid response is not obtained by the client computer after waiting for a predetermined time, which depends on the system requirements, there are at least two options for the following procedure, one of which is to update the KMS database for further verifying process, one of which is to select another parameters available in the KMS database for the further verifying process, as in steps S292 and S294.

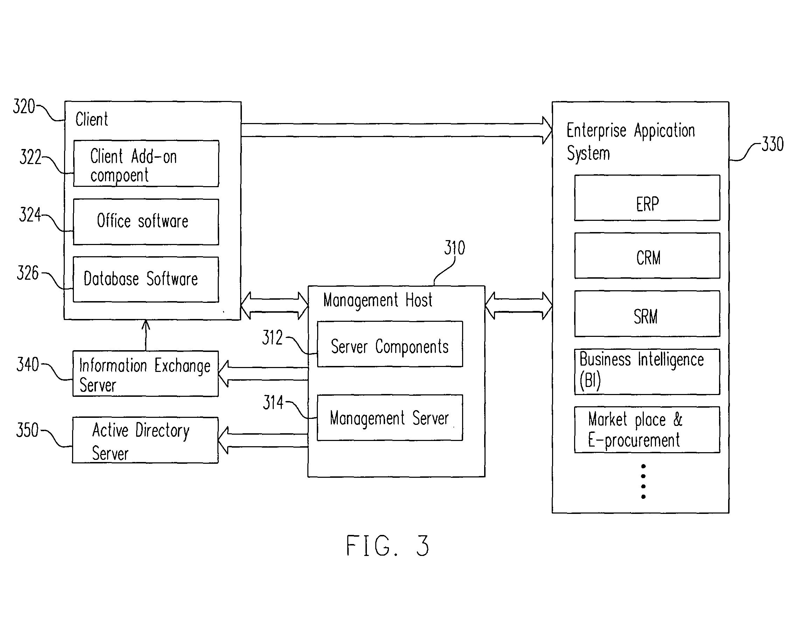

Please refer to FIG.3, it shows architecture of an embodiment where the management host 310 is rebooted and works in the Enterprise 300. The management host 310 is the deployment and communication facilitator for the client 320, the enterprise application system 330, an information exchange server 340 and an active directory server 350, for example. The management host 310 includes, for example, server components 312 and a management server 314. The server components 312 includes, for example, a runtime metadata repository, a module to format and route information to information exchange server 340 such as a Microsoft Exchange Server, a deployment module for delivering updates to the enterprise application system 330, and so on. The runtime metadata repository contains the data that describes the application user interface. It also contains the configuration and routing information. The module for formatting and routing enables direct calls to applications in the enterprise application system 330. This means fewer bottlenecks during high-volume times. The component can handle connections to multiple Exchange Servers and multiple backend systems. The deployment module enables data to move from the management host 310 to enterprise application system 330 while metadata updates are made. It also deploys forms and documents when requested by the client.

The client 320 at least includes a client add-on component 322, office software 324 such as Microsoft Office 2003, and database application software 326 such as a SQL Express. The client add-on component 322 has a runtime engine, a secure cache for data storage, query assembly and metadata, and an output queue. The client add-on component 322 is installed on the desktop as a plug-in using a plurality of standard remote tools for the management server 314 in the management host 310, such as Microsoft Systems Management Server. The runtime engine interprets user-interface metadata and creates toolbars and task panes that a user sees in its office software 324. The secure cache allows frequently used application data, such as dropdown lists, to remain local and also uses scenarios from the management host 310 in offline. To keep data current and accurate, the secure cache also triggers automatic updates via the output queue when the user comes back online.

The enterprise application system 330 includes an add-on component, which includes an engine for bundling service requests to a plurality of business suite applications in the enterprise application system 330, configuration tools and a metadata repository. The add-on component has a web-services adapter for connection to the business suite applications. The add-on component lets the management host 310 deliver users' query responses while at the same time maintaining business suite applications process logic and rules. The business suite applications includes, for example, an enterprise resource planning (ERP) application, a customer relationship management (CRM) application, a supplier relationship management (SRM) application, a supply chain management (SCM) application, a business intelligence (BI) application, or a marketplace & e-procurement application, etc.

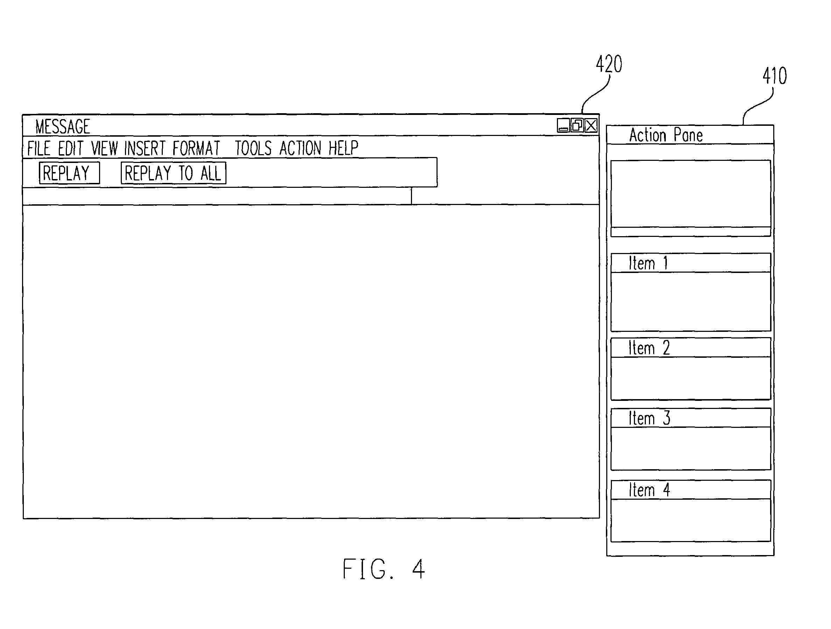

Based on the architecture shown in FIG.3, an exemplary scenario for leave management is provided as an embodiment of the verifying method for implementing management software at a simulated environment of a client end. Please refer to FIG.4, a client add-on component is installed in a client computer and, when the software is started, a pop-up window is shown in the right side of the display monitor. As described above, the client add-on component includes a runtime engine which interprets user-interface metadata and creates toolbars and task panes, which are shown in the action pane 410 for example, that a user sees in its office software. Here, Duet architecture is introduced as an example in the embodiment, but not limited thereto. The Duet architecture is developed by Microsoft™ and SAP™ companies, in which combines the Microsoft Office applications with the core SAP business processes.

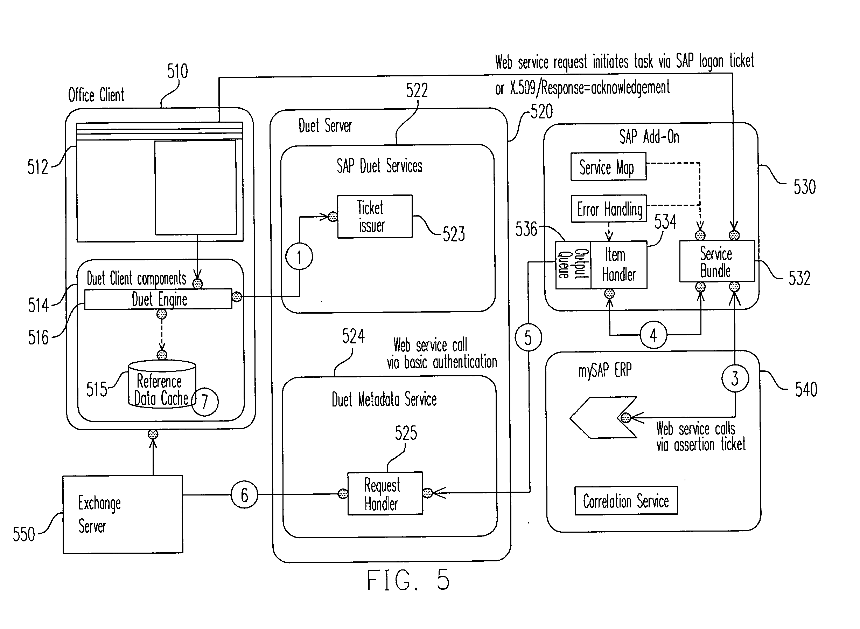

For verifying the implementation of the management software, it is assumed that a leave request 420 is created by an employee for temporarily leave to get together with his family. A verifying procedure is performed through multiple authorization points to check if a valid and complete response can be returned to the client's computer. Please refer to FIG.5, which shows architecture of the path from sending a leave request by a client computer to the backend and returning a response of approval or rejection from the backed to the client computer.

When an office client 510 sends out a leave request from its action pane of the Duet client component (client add-on component) 514, a Duet engine of the Duet client component transfers the leave request to a ticket issuer 523 for obtaining a SAP logon ticket by using Keberous token in the Duet server 520 of the management host, as in step 1. The leave request is then sent to the SAP add-on component 530 in the enterprise application system via a web service using the SAP logon ticket, as in step 2. The service bundle 532 will store the leave request and communicate with the enterprise resource planning (ERP) application 540, as in step 3. Then, the leave request is sent to an item handler, as shown in step 4, for handling the approval or rejection in response to such leave request. The result is queued in an output queue 536 and then outputs to a request handler 525 in a Duet metadata service 524 in the Duet server 520, as in step 5. The request handler 525 forwards the result to a reference data cache 515 in the office client 510 through an exchange server 550, as in step 6. The office client 510 can obtain the result from the Duet engine 516 via the action pane in the Duet client component 514.

The leave management scenario is an example for explaining the process of verifying the implementation of the management software. One or more scenarios can be performed on the management host for testing. Each of the scenarios should consider that the request form the client computer is validated through multiple authorization points and finally a valid and complete response to the client's request is returned successfully. If the verifying result is failed, more configuration processes may be performed again, for example, identifying the peripheral hosts connected; obtaining software licensing data, software configuration data, and network configuration data of the peripheral hosts for setting the management software; and installing the application programs in the peripheral hosts. A verifying method for implementing management software is performed again after completion of the re-configuration and re-installing.

Through said implementation of the management software and verifying method performed thereon, the complicated implementation procedures can be simplified to the same degree as the general installation of the software and network. The user completes the implementation procedures by merely inputting the software licensing data of each of the application programs, the software configuration data, and the network configuration data of each of the peripheral hosts. In comparison with the time-consuming system implementation cycle according to the related art, the method proposed by the present invention only takes several days or hours to complete all of the implementation procedures, leading to outstanding performance and stability.

It should be noted that the management software is individually installed and configured based on a plurality of the client's requirements by adopting said method for implementing the easy-to-install management software in the present invention. Moreover, the management software is stored and archived as an image file for reducing production costs arisen from the services rendered by the service vendor.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method for verifying implementation of management software in a management host, wherein the management host is pre-installed with a plurality of pre-configured management software at a service end, and the management host is connected to a plurality of peripheral hosts simulated at an environment of a client end through a network, the method comprising:
setting data in the management host and rebooting the management host to finish the implementation of the management software;
selecting a verifying scenario which touches on multiple authorization points in a path from the client to the peripheral hosts via the management software in the management host; and
creating a request according to the verifying scenario and sending the request to the path for validation, if a valid response corresponding to the request is returned, the implementation of the management software is verified as complete and successful.

2. The method of claim 1, wherein setting data in the management host comprising obtaining software licensing data, network configuration data , and software configuration data of the peripheral hosts at the service end, and setting the software licensing data, network configuration data, and software configuration data in the management host.

3. The method of claim 1, wherein the peripheral hosts comprise an Exchange Server, a Structured Query Language (SQL) Server, an Active Directory Service Server, and a Backend Server.

4. The method of claim 1, wherein one of the peripheral hosts comprises an engine for bundling service requests to a plurality of business suite applications in an enterprise application system, configuration tools and a metadata repository.

5. The method of claim 1, wherein the business suite applications comprise an enterprise resource planning (ERP) application, a customer relationship management (CRM) application, a supplier relationship management (SRM) application, a supply chain management (SCM) application, a business intelligence (BI) application, or a marketplace & e-procurement application

6. The method of claim 1, wherein the request is created according to the verifying scenario in a client computer, wherein the client computer is set up with a client application of the management software in order to work with the management host.

7. The method of claim 1, wherein the data set in the management host are a first set of parameters provided by a knowledge management system.

8. The method of claim 7, wherein if the valid response is not obtained after for a predetermined time, the knowledge management system is updated.

9. The method of claim 7, wherein if the valid response is not obtained after for a predetermined time, a second set of parameters are selected from the knowledge management system and another request is created according to the verifying scenario and sent to the path for validation.

10. A method for verifying implementation of management software in a management host, wherein the management host is pre-installed with a plurality of pre-configured management software at a service end, and the management host is connected to a plurality of peripheral hosts simulated at an environment of a client end through a network, the method comprising:
setting data in the management host and rebooting the management host to finish the implementation of the management software;
selecting a plurality of verifying scenarios, each of which touches on multiple authorization points in a path from the client to the peripheral hosts via the management software in the management host; and
creating a plurality of requests according to the verifying scenarios and sequentially sending the request to the path for validation, if a plurality of valid responses corresponding to the requests are sequentially returned, the implementation of the management software is verified as complete and successful.

11. The method of claim 10, wherein setting data in the management host comprising obtaining software licensing data and network configuration data of the peripheral hosts at the service end, and setting the software licensing data and network configuration data in the management host.

12. The method of claim 10, wherein the peripheral hosts comprise an Exchange Server, a Structured Query Language (SQL) Server, an Active Directory Service Server, and a Backend Server.

13. The method of claim 10, wherein one of the peripheral hosts comprises an engine for bundling service requests to a plurality of business suite applications in an enterprise application system, configuration tools and a metadata repository.

14. The method of claim 10, wherein the business suite applications comprise an enterprise resource planning (ERP) application, a customer relationship management (CRM) application, a supplier relationship management (SRM) application, a supply chain management (SCM) application, a business intelligence (BI) application, or a marketplace & e-procurement application

15. The method of claim 10, wherein the requests are created according to the verifying scenarios in a client computer, wherein the client computer is set up with a client application of the management software in order to work with the management host.

16. The method of claim 10, wherein the data set in the management host are a first set of parameters provided by a knowledge management system.

17. The method of claim 16, wherein if the valid response is not obtained after for a predetermined time, the knowledge management system is updated and another request is created according to the plurality of verifying scenario and sent to the path for validation.

18. The method of claim 16, wherein if the valid response is not obtained after for a predetermined time, a second set of parameters are selected from the knowledge management system and another request is created according to the plurality of verifying scenario and sent to the path for validation.
